# EUROPÄISCHE PATENTSCHRIFT

(11) **EP 0 842 844 B1**
(45) Veröffentlichungstag und Bekanntmachung des Hinweises auf die Patenterteilung: **17.09.2003**
(21) Anmeldenummer: 97118263.9
(22) Anmeldetag: 21.10.1997
(51) Int. Cl.: B62J 1/00, B62J 1/28

(54) **Fahrzeugsitz**
Vehicle seat
Siège de véhicule

(30) Priorität: 16.11.1996 DE 19647464
(43) Veröffentlichungstag der Anmeldung: 20.05.1998
(73) Patentinhaber: Bayerische Motoren Werke Aktiengesellschaft, 80788 München (DE)
(72) Erfinder: Stark, Rudolf, 81737 München (DE); Diehl, Helmut, 82431 Kochel (DE); Gadner, Peter, 80637 München (DE)

(56) Entgegenhaltungen:
- US-A- 3 822 917
- US-A- 3 913 974
- US-A- 4 030 750
- US-A- 4 506 754
- US-A- 4 540 217

## Beschreibung

Die Erfindung bezieht sich auf einen Fahrzeugsitz, insbesondere für Einspurfahrzeuge, wie er im Oberbegriff des Hauptanspruchs beschrieben ist.

Ein solcher Fahrzeugsitz ist aus der US-A 4 506 754 für ein Motorrad bekannt. Bei dieser Ausführung lassen sich die Sitzbank, die Fußrasten und gegebenenfalls der Lenker des Motorrades auf die jeweiligen Körpergrößen der einzelnen Fahrer einstellen. Dabei kann der Sitz in Fahrzeuglängsrichtung verschoben werden. Außerdem weist er eine umlegbare Rückenstütze auf, die im umgelegten Zustand als Notsitz dient. Die Rückenstütze kann dabei entweder eine als Rückenlehne wirkende aufgerichtete Position oder die erwähnte umgelegte Position einnehmen.

Die vorbekannte Lösung lässt Verstellmöglichkeiten in einem großen Umfang zu, jedoch sind die einzelnen Verstellmechanismen relativ aufwendig ausgeführt. Bei der Vielzahl der Verstellmöglichkeiten besteht darüber hinaus die Gefahr, dass der Fahrer seine gewünschte Position nicht findet.

Die US-A-3 913 974 zeigt eine Motorradsitzbank für den Fahrer und Beifahrer. Ein Teil der Sitzbank im Bereich des Sitzabschnittes für den Beifahrer kann als Rückenstütze für den Fahrer nach oben geschwenkt werden. Dabei lässt sich die Neigung des hochgeschwenkten Sitzteiles in zwei unterschiedlichen Positionen einstellen.

Aufgabe der Erfindung ist es, einen gattungsgemäßen Fahrzeugsitz so auszulegen, dass er einfach zu verstellen ist und dabei den unterschiedlichen Körpergrößen der Fahrer zumindest in vertretbaren Grenzen gerecht wird. Außerdem soll der Fahrzeugsitz komfortabel sein.

Die Aufgabe wird erfindungsgemäß mit den kennzeichnenden Merkmalen des Hauptanspruchs gelöst. Vorteilhafte Ausgestaltungen der Erfindung ergeben sich aus den Unteransprüchen.

Es hat sich gezeigt, dass der Fahrer eine bequeme Haltung auf einem Fahrzeug dadurch zu erreichen sucht, dass er je nach Körpergröße seinen Oberkörper mehr oder weniger nach hinten neigt. Diese Erkenntnis macht sich auch die Erfindung zunutze. Hierfür weist die Erfindung den Einstellmechanismus mit der Einstellwelle auf, die einmal in einem Abschnitt der Rückenlehne drehbar gelagert ist und mit einem Exzenter in ein am Fahrzeugaufbau befestigtes Heckträgerteil eingreift. Der Heckträgerteil dient dabei zugleich der schwenkbaren Anordnung der Rückenlehne.

Durch Verdrehen der Einstellwelle zwingt der Exzenter der Rückenlehne die unterschiedlichen Neigungen auf, indem er sich in einer entsprechenden Bohrung im Heckträgerteil abstützt. Um dem Fahrer eindeutige Einstellpositionen vorzugeben, ist es zweckmäßig, die Neigungsverstellung in festgelegten Stufen zu ermöglichen. Erreicht wird dies mit Rastmarken, in denen die Einstellwelle durch Federkraft fixiert ist.

Die Einstellwelle ermöglicht in einer vorteilhaften Ausführung der Erfindung neben der Neigungsverstellung auch das Umlegen der Rückenlehne. Sie fixiert dabei die Rückenlehne in der umgelegten Position. Auf diese Weise sind alle möglichen Verstellfunktionen der Rückenlehne weitestgehend in einem Bauteil vereinigt.

Es hat sich weiter gezeigt, daß unter gewissen Umständen auch eine in ihrer Neigung optimal eingestellte Rückenlehne insbesondere bei längerer Fahrt als unkomfortabel empfunden werden kann. In einer zweckmäßigen Ausgestaltung der Erfindung ist daher die Rückenlehne in jeder ihrer Neigungsstellungen in vorgegebenen Grenzen federnd nachgiebig. Erreicht wird dies in einfacher Form durch eine Blattfeder, die das eigentliche Polster der Rückenlehne mit ihrem Lager- bzw. Verstellabschnitt verbindet.

Weitere vorteilhafte Ausgestaltungen der Erfindung ergeben sich aus der nachfolgenden Beschreibung eines Ausführungsbeispiels und der dazugehörenden Zeichnung. Es zeigen
- Figur 1 a: einen Fahrzeugsitz mit hochgestellter Rückenlehne.
- Fig. 1b: den gleichen Fahrzeugsitz mit umgelegter Rückenlehne, als Notsitz dienend,
- Figur 2: in vergrößertem Maßstab und in schematischer Darstellung den Verstellmechanismus für die Rückenlehne,
- Figur 3: das in Figur 2 gezeigte Heckträgerteil in Einzeldarstellung und
- Figur 4: eine Schnittdarstellung des Lager- und Verstellmechanismus, in abermals vergrößertem Maßstab.

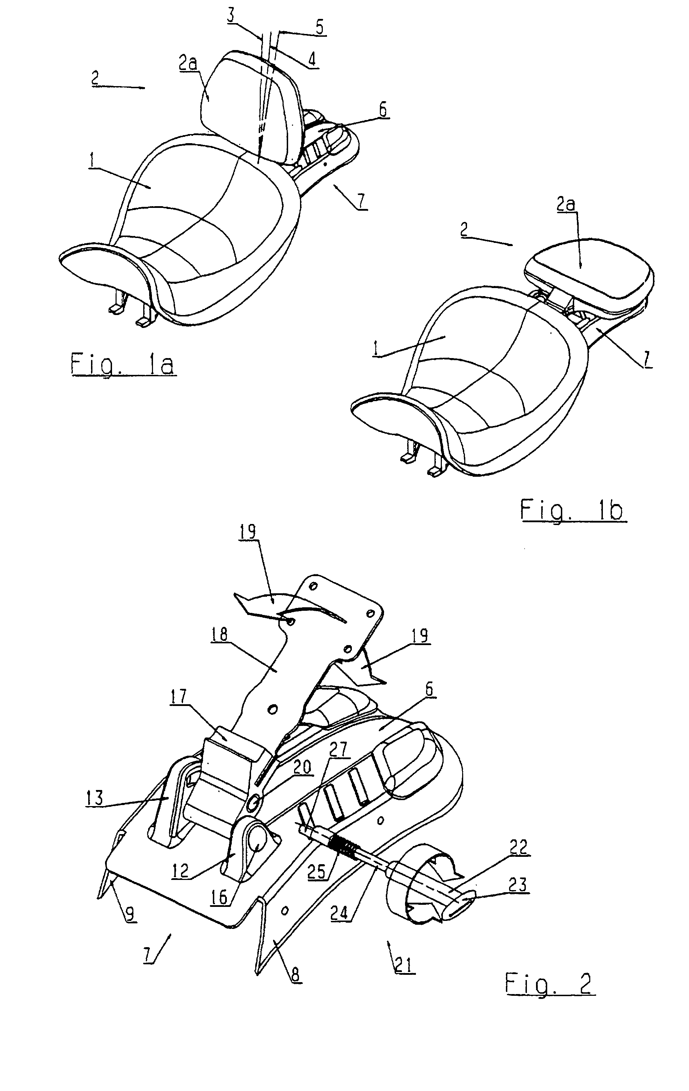

Ein Fahrzeugsitz nach Figur 1 weist eine Sitzbank 1 und eine Rückenlehne 2 auf. Der Fahrzeugsitz gehört zu einem nicht dargestellten Motorrad, in diesem Fall einem sogenannten "Chopper"; entsprechend ähnelt die Sitzbank 1 in ihrer Form einem Sattel. Die Rückenlehne 2, die aus Komfortgründen zum größten Teil als Polster 2a ausgelegt ist, nimmt in Figur 1a eine aufrechte Position ein und dient als Rückenstütze für einen ebenfalls nicht gezeichneten Motorradfahrer. In dieser Position läßt sich die Rückenlehne in mehreren Stufen neigen, die einzelnen Stellungen deuten die strichpunktierten Linien 3, 4, 5 an.

In Figur 1b ist die Rückenlehne 2 umgelegt und liegt dabei - durch den weiter unten beschriebenen Verstellmechanismus - klapperfrei auf einem hinteren Abschnitt 6 eines Heckträgerteils 7 des nicht näher dargestellten Fahrzeugaufbaus.

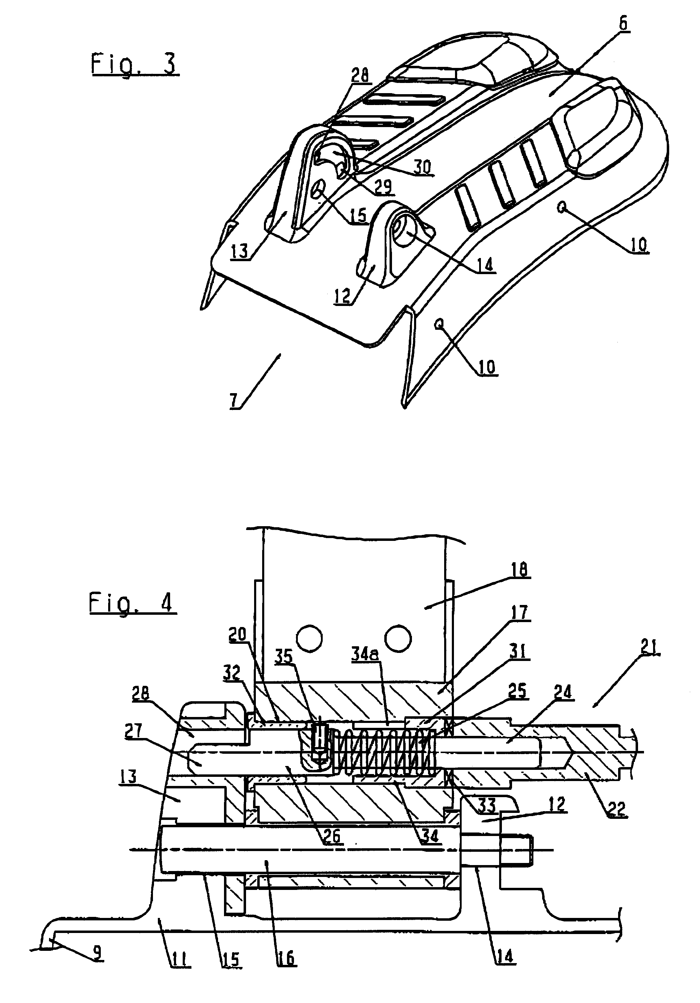

Aus Figur 2 bzw. Figur 3 sind die für das Verstellen und Umlegen der Rückenlehne 2 verantwortlichen Bauteile dargestellt. Es ist nunmehr das gesamte Heckträgerteil 7 erkennbar, das mit Schenkeln 8, 9 über Schraubverbindungen (siehe Schraubenlöcher 10 in Figur 3) am nicht dargestellten Motorradrahmen befestigt ist. Die beiden Schenkeln werden durch einen senkrecht zu ihnen verlaufenden Basisabschnitt 11 miteinander verbunden. An seiner Oberseite sind an dem Basisabschnitt 11 zwei abstehende Lageraugen 12 und 13 ausgeformt, die in etwa in gleicher Ausrichtung, nur entgegensetzt gegenüber den Schenkeln 8 und 9 verlaufen. Außerdem sind sie etwas mehr zum Mittenabschnitt des Basisabschnittes 11 gerückt.

In Bohrungen 14 und 15 der Lageraugen 12, 13 ist verdrehfest eine Lagerwelle 16 gehalten. Die Lagerwelle 16 ist Teil eines Drehgelenks für das Verschwenken der Rückenlehne. Entsprechend sitzt auf der Lagerwelle 16 und zwischen den Schenkeln 12, 13 verdrehbar ein Lagerabschnitt 17 der hier nur angedeuteten Rückenlehne 2. Zum Polster 2a (Figur 1) der Rückenlehne führt eine am Lagerabschnitt 17 befestigte Blattfeder 18, die ein federndes Nachgeben der Rückenlehne 2 erlaubt. Die Federbewegungen sind begrenzt durch Anschläge, die nicht im einzelnen dargestellt sind. Ein Doppelpfeil 19 in Figur 2 soll noch einmal die Verschwenkbarkeit der Rückenlehne in die aufrechte und umgelegte Position nach Figur 1a und 1b andeuten.

Der Neigungsverstellmechanismus der Rückenlehne geht aus den Figuren 2 bis 4 hervor. Eine Durchgangsbohrung 20, die - wie Figur 4 zeigt - abgestuft ist, durchzieht den Lagerabschnitt 17 der Rückenlehne. Dabei ist sie in etwa parallel zur Lagerwelle 16 ausgerichtet. In die Durchgangsbohrung 20 ist eine insgesamt mit 21 bezeichnete Einstellwelle einsetzbar, die aus zwei Teilabschnitte besteht. Ein erster Teilabschnitt 22 liegt im montierten Zustand der Einstellwelle außerhalb der Durchgangsbohrung 20. Er trägt an seinem dem Lagerabschnitt 17 abgewandten Ende einen Handknauf 23, mit dem der Fahrer die Einstellwelle 21 von Hand und ohne zusätzliches Werkzeug verdrehen kann.

Am anderen Ende ist im Teilabschnitt 22 ein im Durchmesser verringerter weiterer Teilabschnitt der Einstellwelle mit dem einen Ende eines Wellenabschnittes 24 eingesetzt, der mit seinem aus dem Teilabschnitt 22 herausragenden Teil in die Durchgangsbohrung 20 hineinragt. Eine Druckfeder 25 ist über einen gewissen Längenbereich über diesen Wellenabschnitt 24 geschoben. Dabei liegt die Druckfeder 25 im montierten Zustand der Einstellwelle 21 innerhalb der Bohrung 20.

Der Wellenabschnitt 24 geht in einen weiteren Wellenabschnitt 26 über, der schließlich in einem exzentrischen Zapfen 27 endet. Dieser exzentrische Zapfen 27 greift im zusammengebauten Zustand und bei aufgerichteter Lehne in ein Langloch 28 (Figur 3) des Lagerauges 13 ein. Dabei ist das Langloch 28 in Fahrzeughochrichtung, also in etwa senkrecht zum Verlauf des Heckträgerteils 7 ausgerichtet (siehe auch Fig. 4). Seine Länge ist etwas größer als der Durchmesser des zentrischen Teils der Wellenabschnitts 26 gewählt, während die Breite des Langloches 28 dem Durchmesser des exzentrischen Zapfens 27 entspricht. Der Zapfen 27 kann sich dabei in dem Langloch 28 drehen.

Ist die Rückenlehne umgelegt, greift der exzentrische Zapfen 27 in eine Fixierungsbohrung 29 des Lagerauges 13 ein. Die Fixierungsbohrung ist wiederum ein senkrecht ausgerichtetes Langloch und der Zapfen 27 befindet sich dabei am oberen Ende des Langloches. Auf dieses Weise ist sichergestellt, daß bei Belastung dieses Notsitzes durch einen Sozius keine unnötigen Kräfte auf den Zapfen 27 wirken. Eine Führungsnut 30 liegt zwischen Langloch 28 und Fixierungsbohrung 29.

Die drehbare Lagerung der Einstellwelle 21 erfolgt im wesentlichen über eine Lagerbuchse 32, die in der Durchgangsbohrung 20 befestigt ist. Eine Verrastungsbuchse 31 ist ebenfalls darin befestigt und kann teilweise die Einstellwelle mitlagern. Für ihre Hauptfunktion weist die Verrastungsbuchse 31 an ihrer Stirnseite, die zum Wellenabschnitt 22 zeigt, in Umfangsrichtung verteilt vier Anlaufschrägen 33 auf, deren Schrägen in Achsrichtung der Einstellwelle 21 verlaufen. An seinem der Verrastungsbuchse 31 zugekehrten Stirnabschnitt sind desweiteren im Wellenabschnitt 22 ebenfalls Anlaufschrägen 33 eingearbeitet und den Schrägen der Verrastungsbuchse 31 nachgebildet.

An ihrer den Anlaufschrägen abgewandten Seite dient die Verrastungsbuchse 31 als Widerlager für die Druckfeder 25. Das andere Ende der Druckfeder 25 stützt sich dabei an dem Stufensprung zwischen den unterschiedlichen Durchmessern der Wellenabschnitte 24 und 26 ab. Schließlich geht die Verrastungsbuchse an ihrem den Anlaufschrägen abgewandten Abschnitt in einen hohlzylindrischen Fortsatz 34 über, der eine axial verlaufende, einseitig offene Nut 34a aufweist. Die Breite der Nut 34a ist so gewählt, daß eine am Umfang des Wellenabschnitts 26 eingesetzte Wurmschraube 35 mit seinem herausragenden Kopfabschnitt einführbar ist.

Der Verstellmechanismus arbeitet in folgender Weise:

Bei aufgerichteter Rückenlehne greift - wie bereits ausgeführt - der Zapfen 27 in das Langloch 28. Beim Verdrehen der Einstellwelle 21 kann sich der Zapfen entlang der Längserstreckung des Langloches 28 bewegen. Eine hierzu senkrechte Bewegung kann er nicht ausführen, da die Breite des Langloches 28 seinem Durchmesser entspricht. Die Folge ist, daß die Einstellwelle 21 über die Exzentrität des Zapfens 27 der Lehne eine Neigungsverstellung aufzwingt.

Durch die aufeinander gleitenden Anlaufschrägen 33 wird die Verstellwelle beim Verdrehen gegen die Rückstellkraft der Druckfeder 25 axial weg von der Durchgangsbohrung 20 bewegt. Sobald der Handkauf 23 losgelassen wird, drängt die Druckfeder 25 die Verstellwelle 21 wieder axial in Richtung Durchgangsbohrung in eine durch die Form der Anlaufschräge gebildete stabile Lage. Da über den Umfang verteilt vier Anlaufschrägen vorhanden sind, sind vier Einstellungsmöglichkeiten gegeben. Allerdings bewirken zwei Einstellmöglichkeiten die gleiche Neigungsverstellung der Rückenlehne, nämlich in den Stellungen, in denen sich der Zapfen 27 am oberen bzw. unteren Ende des Langloches 28 befindet.

Zum Umlegen der Rückenlehne 2 wird die Verstellwelle 21 gegen die Kraft der Druckfeder 25 weiter herausgezogen, bis der Zapfen 27 außer Eingriff mit dem Langloch 28 kommt. Sodann läßt sich die Rückenlehne nach unten klappen. Wird der Handknauf 23 losgelassen, schiebt die Druckfeder den Zapfen 27 in die Fixierungsbohrung 29. Damit ist die Rückenlehne in dieser Position fixiert.

Um zu verhindern, daß die Rückenlehne bei dieser Position lose, Klappergeräusche verursachend, auf dem Heckträgerteil liegt, ist es sinnvoll das Umlegen nur in einer ganz bestimmten Drehstellung der Verstellwelle 21 zu ermöglichen. Dies wird durch die Nut 34a und den Kopfabschnitt der Wurmschraube 35 erreicht. Nur in der vorgegebenen Drehlage kann der Kopfabschnitt in die Nut eintreten und so der Einstellwelle 21 erlauben, genügend weit herausgezogen zu werden. In allen anderen Drehlagen stößt der Kopfabschnitt gegen die Stirnfläche der Hülse 34, so daß ein Herausbewegen des Zapfens 27 aus dem Langloch 28 nicht möglich ist.

## Patentansprüche

1. Fahrzeugsitz, insbesondere für Einspurfahrzeuge, mit einer Sitzbank (1) und einer umlegbaren Rückenlehne (2), die über ein Drehgelenk von einer als Rückenstütze dienenden aufrechten Position in eine umgelegte Position verschwenkbar und in dieser Position als zusätzliche Sitzgelegenheit verwendbar und in der aufrechten Position in ihrer Neigung einstellbar ist, wobei das Drehgelenk aus einem am Fahrzeugaufbau festgelegten Heckträgerabschnitt (7) mit wenigsten zwei abstehenden Lageraugen (12, 13) mit Bohrungen (14, 15) für die Aufnahme einer der Rückenlehne (2) zugeordneten Lagerwelle (16) besteht, **dadurch gekennzeichnet, dass** ein an der Rückenlehne (2) vorgesehener Einstellmechanismus mit einem der Lageraugen (13) zusammenarbeitet und dass der Einstellmechanismus für die Neigungsverstellung der Rückenlehne (2) eine in etwa parallel zur Lagerwelle (16) verlaufende, in der Rückenlehne drehbar gehaltene Einstellwelle (21) mit einem exzentrisch angeordneten Zapfen (27) aufweist, wobei der Zapfen (27) in eine Längsbohrung (28) des dem Einstellmechanismus zugeordneten Lagerauge (13) eingreift und sich bei belasteter Rückenlehne gegen die Bohrungswand abstützt.

2. Fahrzeugsitz nach Anspruch 1, **dadurch gekennzeichnet, dass** durch Drehen der Einstellwelle (21) sich die Rückenlehne (2) in die jeweilige Neigung einstellt und dass Rastmarken (33) die Einstellwelle (21) in der gewählten Drehstellung fixieren.

3. Fahrzeugsitz nach Anspruch 2, **dadurch gekennzeichnet, dass** die Rastmarken als Anlaufschrägen (33) in der Rückenlehne ausgebildet sind, in die entsprechend nachgeformte Anlaufschrägen der Einstellwelle (21) eingreifen und dass bei einem Verdrehen die aufeinander gleitenden Anlaufschrägen die Einstellwelle (21) gegen Federkraft axial verlagern.

4. Fahrzeugsitz nach einem der Ansprüche 1 bis 3, **dadurch gekennzeichnet, dass** die Einstellwelle (21) für das Umlegen der Rückenlehne (2) gegen Federkraft axial von dem Lagerauge (13) wegziehbar ist, wobei sich ihr exzentrischer Zapfen (27) aus der Längsbohrung (28) herausbewegt.

5. Fahrzeugsitz nach Anspruch 4, **dadurch gekennzeichnet, dass** der exzentrische Zapfen (27) nur bei einer festgelegten Drehstellung der Einstellwelle aus der Längsbohrung (28) bewegbar ist.

6. Fahrzeugsitz nach Anspruch 5, **dadurch gekennzeichnet, dass** die Einstellwelle (21) von einem innerhalb der Rückenlehne (2) angeordneten hohlzylindrischen Fortsatz (34) einer Verrastungshülse (31) umgeben und in ihm drehbar gehalten ist und dass der Fortsatz (34) eine axial verlaufende einseitig offene Nut (34a) aufweist, in die ein auf der Einstellwelle (21) radial abstehender Anschlag einführbar ist.

7. Fahrzeugsitz nach einem der Ansprüche 1 bis 6, **dadurch gekennzeichnet, dass** der exzentrische Zapfen (27) bei umgelegter Rückenlehne (2) in eine Fixierungsausnehmung (29) des Lagerauges (13) eingreift.

8. Fahrzeugsitz nach einem der Ansprüche 1 bis 7, **dadurch gekennzeichnet, dass** die Rückenlehne (2) in jeder Neigungsstellung in vorgegebenen Grenzen federnd gehalten ist.

9. Fahrzeugsitz nach Anspruch 8, **dadurch gekennzeichnet, dass** die Rückenlehne (2) einen Lagerabschnitt (17) aufweist, mit dem sie in dem Lagerbock (7) schwenkbar gehalten ist und der die Einstellwelle (21) aufnimmt, und dass dieser Lagerabschnitt (17) über eine Blattfeder (18) mit einem den Rücken des Fahrers stützenden Polsters (2a) der Rückenlehne (2) verbunden ist.

10. Fahrzeugsitz nach Anspruch 9, **dadurch gekennzeichnet, dass** die Federbewegungen der Blattfeder (18) über Endanschläge begrenzt sind.

## Claims

1. A seat, especially for single-track vehicles, comprising a sitting surface (1) and a foldable back rest (2) which can be pivoted on a swivel joint from an upright back-resting position into a folded-down position in which it can be used as an additional seat facility, whereas in the raised position its angle is adjustable, wherein the swivel joint comprises a rear support portion (7) fastened to the vehicle body and with at least two projecting bearing eyelets (12, 13) with bores (14, 15) for receiving a bearing shaft (16) associated with the back rest (2), **characterised in that** an adjusting mechanism provided on the back rest (2) co-operates with one of the bearing eyelets (13) and the mechanism for adjusting the inclination of the back rest (2) comprises a shaft (21) held rotatably in the back rest, extending approximately parallel to the bearing shaft (16) and with an eccentric pin (27), wherein the pin (27) engages in a longitudinal bore (28) in the bearing eyelet (13) associated with the adjusting mechanism and abuts the wall of the bore when the back rest is under load.

2. A seat according to claim 1, **characterised in that** the back rest (2) is adjusted at the required angle by rotating the shaft (21), and marked locking means (33) fix the adjusting shaft (21) in the chosen rotary position.

3. A seat according to claim 2, **characterised in that** the locking means are slopes (33) in the back rest and engage correspondingly shaped slopes on the adjusting shaft (21), and during rotation the slopes slide on one another and move the adjusting shaft (21) axially against spring force.

4. A seat according to any of claims 1 to 3, **characterised in that** in order to fold down the back rest (2), the adjusting shaft (21) can be pulled axially away from the bearing eyelet (13) against spring force, when its eccentric pin (27) moves out of the longitudinal bore (28).

5. A seat according to claim 4, **characterised in that** the eccentric pin (27) is movable out of the longitudinal bore (28) only when the adjusting shaft is in a fixed rotary position.

6. A seat according to claim 5, **characterised in that** the adjusting shaft (21) is surrounded and rotatably held in a hollow cylindrical continuation (34) of a locking sleeve (31) disposed inside the back rest (2) and the continuation (34) has an axial groove (34a) open on one side, for inserting a stop projecting radially on the adjusting shaft (21).

7. A seat according to any of claims 1 to 6, **characterised in that** when the back rest (2) is folded down, the eccentric pin (27) engages in a fixing recess (29) in the bearing eyelet (13).

8. A seat according to any of claims 1 to 7, **characterised in that** in each angular position the back rest (2) is held within preset limits by spring force.

9. A seat according to claim 8, **characterised in that** the back rest (2) has a bearing portion (17) which receives the bearing shaft (21) and by means of which the back rest is held pivotably in the bearing block (7), and the said bearing portion (17) is connected by a leaf spring (18) to upholstery (2a) on the back rest (2) for supporting the driver's back.

10. A seat according to claim 9, **characterised in that** the spring movements of the leaf spring (18) are limited by end stops.

## Revendications

1. Siège de véhicule notamment pour véhicules monotraces, comprenant une assise de siège (1) et un dossier rabattable (2) qui peut être basculé, au moyen d'une articulation de rotation, d'une position relevée servant d'appui dorsal à une position rabattue et utilisé dans cette position comme une assise supplémentaire, et qui peut être réglé en inclinaison dans la position redressée, l'articulation de rotation étant composée d'un segment porteur arrière (7) fixé à la superstructure du véhicule et possédant deux oeillets de palier saillants (12, 13) munis de perçages (14, 15) pour recevoir un arbre de portée (16) associé au dossier (2),
**caractérisé en ce qu'**
un mécanisme de réglage prévu sur le dossier (2) coopère avec un des oeillets de palier (13), et le mécanisme de réglage pour le réglage de l'inclinaison du dossier (2) présente un arbre de réglage (21) s'étendant à peu près parallèlement à l'arbre de portée (16), tenu mobile en rotation dans le dossier et muni d'un téton (27) disposé excentriquement, le téton (27) étant engagé dans un perçage allongé (28) de l'oeillet de palier (13) associé au mécanisme de réglage et s'appuyant contre la paroi du perçage lorsque le dossier subit une sollicitation.

2. Siège de véhicule selon la revendication 1,
**caractérisé en ce que**
sous l'effet d'une rotation de l'arbre de réglage (21) le dossier (2) se règle dans l'inclinaison correspondante et **en ce que** des crantages (33) immobilisent l'arbre de réglage (21) dans la position de rotation choisie.

3. Siège de véhicule selon la revendication 2,
**caractérisé en ce que**
les crantages sont constitués par des flancs d'appui (33) prévus dans le dossier, dans lesquels s'engagent des flancs de l'arbre de réglage (21) adaptés en conséquence et **en ce que**, lors de la rotation, les flancs qui glissent les uns sur les autres déplacent l'arbre de réglage (21) axialement à rencontre d'une force élastique.

4. Siège de véhicule selon une des revendications 1 à 3,
**caractérisé en ce que**
l'arbre de réglage (21) peut être tiré axialement de l'oeillet de palier (13) à l'encontre d'une force de ressort pour le rabattement du dossier (2), son téton excentrique (27) se dégageant alors du perçage allongé (28).

5. Siège de véhicule selon la revendication 4,
**caractérisé en ce que**
le téton excentrique (27) ne peut être extrait du perçage allongé (28) que dans une position déterminée de l'arbre de réglage.

6. Siège de véhicule selon la revendication 5,
**caractérisé en ce que**
l'arbre de réglage (21) est entouré d'un prolongement cylindrique creux (34) appartenant à un manchon de verrouillage (31) qui est disposé à l'intérieur du dossier (2), et est monté rotatif dans ce prolongement, et le prolongement (34) présente une rainure (34a) ouverte d'un côté, qui s'étend axialement, dans laquelle une butée en saillie radiale sur l'arbre de réglage (21) peut être engagée.

7. Siège de véhicule selon une des revendications 1 à 6,
**caractérisé en ce que**
lorsque le dossier (2) est rabattu, le téton excentrique (27) est engagé dans un évidement de blocage (29) de l'oeillet de palier (13).

8. Siège de véhicule selon une des revendications 1 à 6,
**caractérisé en ce que**
le dossier (2) est tenu élastiquement dans chaque position d'inclinaison dans des limites prédéterminées.

9. Siège de véhicule selon la revendication 8,
**caractérisé en ce que**
le dossier (2) présente un segment de portée (17) avec lequel il est tenu pivotant dans le support de portée (7) et qui reçoit l'arbre de réglage (21) et le segment de portée (17) est relié par un ressort lame (18) à un coussin (2a) du dossier (2) qui donne appui au dos du conducteur.

10. Siège de véhicule selon la revendication 9,
**caractérisé en ce que**
les mouvements de débattement élastique du ressort lame (18) sont limités par des butées d'extrémité.
